(19) Europäisches Patentamt
European Patent Office
Office européen des brevets

(11) **EP 1 714 449 B1**

(12) **EUROPEAN PATENT SPECIFICATION**

(45) Date of publication and mention
of the grant of the patent:
**01.04.2009 Bulletin 2009/14**

(21) Application number: **04775197.9**

(22) Date of filing: **05.02.2004**

(51) Int Cl.:
**H04L 25/02** (2006.01)

(86) International application number:
**PCT/RU2004/000037**

(87) International publication number:
**WO 2005/076555 (18.08.2005 Gazette 2005/33)**

(54) **METHOD AND APPARATUS TO PERFORM CHANNEL ESTIMATION FOR A COMMUNICATION SYSTEM**

VERFAHREN UND VORRICHTUNG ZUR DURCHFÜHRUNG VON KANALSCHÄTZUNG FÜR EIN KOMMUNIKATIONSSYSTEM

PROCEDE ET APPAREIL POUR EFFECTUER UNE ESTIMATION DE CANAUX POUR UN SYSTEME DE COMMUNICATION

(84) Designated Contracting States:
**AT BE BG CH CY CZ DE DK EE ES FI FR GB GR HU IE IT LI LU MC NL PT RO SE SI SK TR**

(43) Date of publication of application:
**25.10.2006 Bulletin 2006/43**

(73) Proprietor: **Zakrytoe Aktsionernoe Obschestvo Intel**
**Sokol-10, Moscow 125252 (RU)**

(72) Inventors:
• **MALTSEV, Alexandr Alexandrovich**
**Nizhny Novgorod, 603163 (RU)**
• **SADRI, Ali, Soheil**
**San Diego, CA 92128 (US)**

• **KHORYAEV, Alexey Vladimirovich**
**Dzerzhinsk, 606016 (RU)**
• **ERMOLAYEV, Viktor Timofeevich**
**Nizhny Novgorod, 603024 (RU)**
• **MASLENNIKOV, Roman Olegovich**
**Nizhny Novgorod, 603009 (RU)**

(74) Representative: **Beresford, Keith Denis Lewis**
**BERESFORD & Co.**
**16 High Holborn**
**London**
**WC1V 6BX (GB)**

(56) References cited:
EP-A- 1 376 963          US-A- 5 293 401
US-A1- 2003 003 880      US-A1- 2003 147 476
US-A1- 2003 223 517

**Description**

BACKGROUND

A multiple input multiple output (MIMO) system may involve treating a plurality of communications mediums as a single communication channel. For example, a MIMO system may treat a plurality of individual twisted-pair copper wires bundled into a single cable as a single communications channel having multiple inputs and multiple outputs. Information transmitted over a given copper wire, however, may be susceptible to interference from information transmitted over an adjacent copper wire. This condition is typically referred to as "crosstalk". The performance of a MIMO system may be significantly increased by reducing the amount of crosstalk in the MIMO channel. One technique to assist in reducing crosstalk is to perform channel estimation of the MIMO channel. Improved channel estimation may result in improved performance of the MIMO system. Consequently, there may be need for improvements in such techniques in a device or network.

To perform more accurate channel estimation in MIMO system, US-A-5293401 discloses an equalizer for equalizing a linear modulated signal. The impulse response of the channel is estimated during training sequences before and after a frame.

Another document US2003/147476 teaches a system and method of detecting symbols in a signal. A symbol transmitted is initially estimated based on channel estimate, and then the channel estimate is updated. The symbol is then estimated by using updated channel estimate information and compared with the previous estimate to determine if the previous estimate and the next estimate have converged.

A third document US2003/003880 discusses a data transmitting and receiving technique in MIMO system based on deriving and processing the channel state information (CSI).

SUMMARY OF THE INVENTION

According to one aspect, the invention provides a method of performing channel estimation, comprising: receiving a first training sequence; generating a first estimate of a channel impulse response using a first received training sequence; receiving a second training sequence; and calculating a revised channel impulse response estimate using said first estimate and a second received training sequence; characterised in that: said first estimate of the channel impulse response is a maximum likelihood estimate; the first training sequence is the same as the second training sequence; and the step of calculating said revised channel impulse response estimate comprises: receiving said maximum likelihood estimate; generating a set of threshold values using said maximum likelihood estimate; generating a set of candidate channel impulse response estimate vectors using said threshold values; and selecting said revised channel impulse response estimate from said candidate channel impulse response estimate vectors.

According to another aspect, the present invention provides a system for performing channel estimation, comprising: a first estimator operable to receive a first training sequence and generate a first estimate using a first received training sequence; and a channel tap estimator coupled to said first estimator operable to receive said first estimate and a second training sequence and calculate a revised channel impulse response estimate using said first estimate and a second received training sequence; characterised in that: said first estimator is a maximum likelihood estimator and said first estimate is a maximum likelihood estimate; the first training sequence is the same as the second training sequence; and said channel tap estimator comprises: a threshold generator operable to receive said maximum likelihood estimate and generate a set of threshold values using said maximum likelihood estimate; a candidate channel impulse response generator operable to receive said threshold values and generate a set of candidate channel impulse response estimate vectors using said threshold values; and a channel impulse response selector operable to receive said candidate channel impulse response estimate vectors and a minimum distance value and select said revised channel impulse response estimate from said candidate channel impulse response estimate vectors according to the minimum value.

BRIEF DESCRIPTION OF THE DRAWINGS

The subject matter regarded as the embodiments is particularly pointed out and distinctly claimed in the concluding portion of the specification. The embodiments, however, both as to organization and method of operation, together with objects, features, and advantages thereof, may best be understood by reference to the following detailed description when read with the accompanying drawings in which:

FIG.1 illustrates a MIMO system suitable for practicing one embodiment;
FIG. 2 illustrates a block diagram of a crosstalk filtering module (CFM) in accordance with one embodiment;
FIG. 3 illustrates a programming logic 300 for a CFM in accordance with one embodiment;
FIG. 4 is a graph illustrating the performance of a CFM in accordance with one embodiment;

FIG. 5 illustrates a block diagram of a channel estimator in accordance with one embodiment;

FIG. 6 is a block flow diagram of the programming logic performed by a channel estimator in accordance with one embodiment;

FIG. 7 is a first graph illustrating the performance of a channel estimator in accordance with one embodiment;

FIG. 8 is a second graph illustrating the performance of a channel estimator in accordance with one embodiment; and

FIG. 9 is a third graph illustrating the performance of a channel estimator in accordance with one embodiment.

DETAILED DESCRIPTION

The embodiments may be directed to a method and apparatus to perform channel estimation for a communication system. The channel estimation technique may be used, for example, to suppress crosstalk in a communication system utilizing a full duplex communications medium such as copper wire twisted pairs, radio-frequencies (RF), and other mediums. Examples of crosstalk may include near end crosstalk (NEXT) and far end crosstalk (FEXT). The channel estimation technique may, for example, be used to perform channel estimation for a multiple input multiple output (MIMO) full duplex wired or wireless communication system using either inter-symbol interference (ISI) or non-ISI channels.

In one embodiment, the channel estimation technique may comprise a threshold scheme for training-based channel estimation. A channel impulse response (CIR) estimate may be found by estimating a maximum-likelihood (ML) estimate, and then refining or improving the ML estimate using a threshold scheme. The result is an improved CIR estimate for a MIMO channel.

In one embodiment, the CIR estimate may be used by a crosstalk suppression scheme to reduce or cancel crosstalk for the MIMO system. The crosstalk suppression scheme may suppress, for example, crosstalk in band-limited channels, and also separates the crosstalk suppression problem from the equalization that provides the ultimate crosstalk suppression level. As a result, the embodiment may use the same equalizer for all outputs of the crosstalk suppression scheme.

Numerous specific details may be set forth herein to provide a thorough understanding of the embodiments of the invention. It will be understood by those skilled in the art, however, that the embodiments of the invention may be practiced without these specific details. In other instances, well-known methods, procedures, components and circuits have not been described in detail so as not to obscure the embodiments of the invention. It can be appreciated that the specific structural and functional details disclosed herein may be representative and do not necessarily limit the scope of the invention.

It is worthy to note that any reference in the specification to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

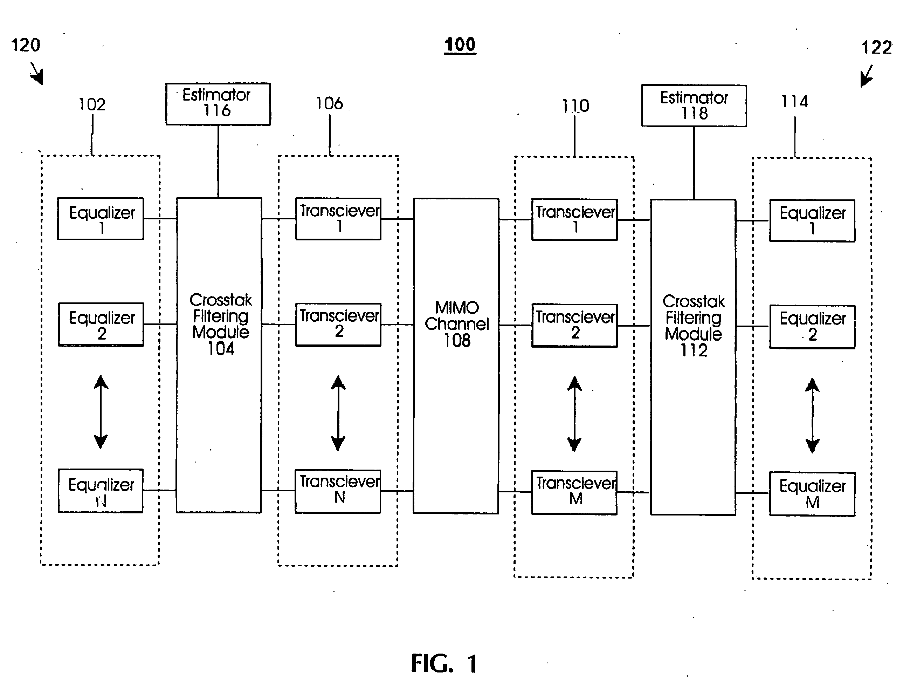

Referring now in detail to the drawings wherein like parts are designated by like reference numerals throughout, there is illustrated in FIG. 1 a system suitable for practicing one embodiment. FIG. 1 is a block diagram of a system 100. System 100 may comprise a plurality of network nodes. The term "network node" as used herein may refer to any node capable of communicating information in accordance with one or more protocols. Examples of network nodes may include a computer, server, switch, router, bridge, gateway, personal digital assistant, mobile device, call terminal and so forth. The term "protocol" as used herein may refer to a set of instructions to control how the information is communicated over the communications medium.

System 100 may communicate various types of information between the various network nodes. For example, one type of information may comprise "media information." Media information may refer to any data representing content meant for a user. Examples of content may include, for example, data from a voice conversation, videoconference, streaming video, electronic mail ("email") message, voice mail message, alphanumeric symbols, graphics, image, video, text and so forth. Data from a voice conversation may be, for example, speech information, silence periods, background noise, comfort noise, tones and so forth. Another type of information may comprise "control information." Control information may refer to any data representing commands, instructions or control words meant for an automated system. For example, control information may be used to route media information through a network, or instruct a network node to process the media information in a predetermined manner. Both the media and control information may be communicated in a data stream between two or more endpoints. The term "data stream" as used herein may refer to a collection of bits, bytes or symbols sent in series during a data communication session.

In same systems, one or more communications mediums may connect the nodes. The term "communications medium" as used herein may refer to any medium capable of carrying information signals. Examples of communications mediums may include metal leads, semiconductor material, twisted-pair wire, co-axial cable, fiber optic, RF spectrum, and so forth. The terms "connection" or "interconnection," and variations thereof, in this context may refer to physical connections and/or logical connections.

The network nodes may be connected by communications mediums comprising RF spectrum for a wireless network, such as a cellular or mobile system. In this case, the network nodes and/or networks shown in system 100 may further comprise the devices and interfaces to convert the signals carried from a wired communications medium to RF signals. Examples of such devices and interfaces may include omni-directional antennas and wireless RF transceivers. The embodiments are not limited in this context.

The network nodes may communicate information to each other in the form of packets. A packet in this context may refer to a set of information of a limited length, with the length typically represented in terms of bits or bytes. An example of a packet length might be 1000 bytes. The packets may be communicated in accordance with one or more packet protocols. For example, in one embodiment the packet protocols may include one or more Internet protocols, such as the Transmission Control Protocol (TCP) and Internet Protocol (IP). The embodiments are not limited in this context.

Referring again to FIG. 1, system 100 may comprise a wired or wireless communication system using a MIMO communication channel. System 100 may comprise a local area network (LAN) operating in accordance with one or more Ethernet based communication protocols as defined by the Institute for Electrical and Electronic Engineers (IEEE) 802.3 series of standards, such as a Gigabit Ethernet 1000Base-T communication system ("Gigabit Ethernet"), an advanced 10GBase-T communication system, and so forth. Although one embodiment may be illustrated in the context of a Gigabit Ethernet system by way of example, it can be appreciated that any type of communication system employing a MIMO channel may be used and still fall within the intended scope of the embodiments.

FIG. 1 may illustrate the structure of Gigabit Ethernet system 100. As shown in FIG. 1, system 100 may comprise network nodes 120 and 122. Network nodes 120 and 122 may each represent processing systems having Gigabit Ethernet device(s). The Gigabit Ethernet devices may be implemented as part of a network interface card (NIC), for example. More particularly, network node 120 may comprise a set of equalizers (1-N) 102, a CFM (CFM) 104, a set of transmitter/receivers ("transceivers") (1-N) 106, and a channel estimator 116. Network node 122 may have a similar structure to network 120, and may comprise a set of equalizers (1-M) 114, a CFM 112, a set of transceivers (1-M) 110, and a channel estimator 118. In a typical implementation, M and N are normally equal, although the embodiments are not necessarily limited in this context. Network nodes 120 and 122 may communicate information between each other using a MIMO channel 108. Although only two network nodes and one MIMO channel are shown in FIG. 1 for purposes of clarity, it can be appreciated that any number of network nodes and MIMO channels may be used and still fall within the scope of the embodiments.

System 100 may operate to communicate information between network nodes 120 and 122 at communication speeds of approximately 1000 megabits per second (Mbps). The 1000 Mbps full duplex data throughput may be achieved using MIMO channel 108. MIMO channel 108 may comprise, for example, four pairs of twisted pair coppers wires bundled in a Category 5 (CAT-5) cable. Each pair may transmit a 250 Mbps data stream encoded into a 4-dimension 5-level pulse amplitude modulation (4-D PAM-5) signal constellation. In essence, the four pairs of CAT-5 unshielded twisted pair (UTP) wiring may be treated as one channel with four inputs and four outputs. Hence, each network node may contain four similar transceivers, one for each pair of physical wire. For example, each of the transmitters of transceivers 1-N may be paired with a corresponding receiver of transceivers 1-M. Hybrid circuits (not shown) may facilitate bidirectional data transmission on the same wire.

During the initialization of system 100, the paired transceivers may go through a training phase in an attempt to characterize MIMO channel 108. Channel estimators 116 and 118 may control or assist in the training phase. Signals may be communicated between the respective transmitters and receivers, and at least one characteristic of MIMO channel 108 may be measured, such as channel impulse responses, amplitude levels, shapes of the signals, signal distortion, crosstalk impulse responses, temporal shifts and delays, and so forth. The communicated signals received by the receiving device are predetermined signals, and deviancies from the expected values are noted by the receiving device.

One factor that can result in deviancies is crosstalk noise. Crosstalk noise, such as FEXT noise, may result when the energy from a signal in one communications path or data stream interferes with the signal in one or more other communication paths or data streams. That is, crosstalk noise represents unwanted coupling between two or more transmitting pairs as the signal propagates from the transmit end of the pair to the receiving end. Crosstalk noise may impact the ability of the receiver to decode a particular data stream, and also may impair the speed or bandwidth for MIMO channel 108.

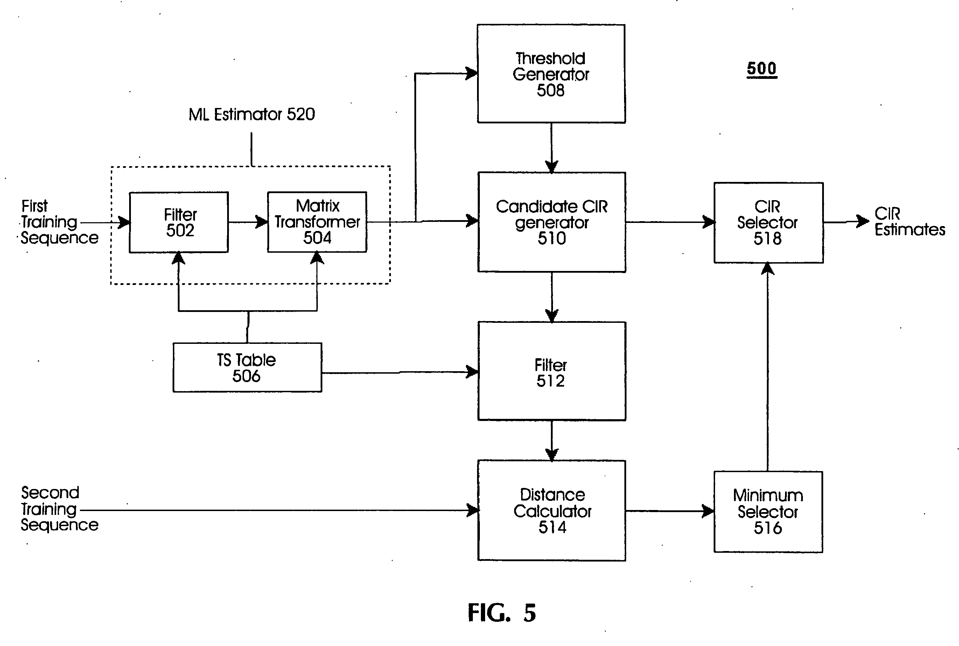

In one embodiment, channel estimators 116 and 118 may be used to perform channel characterization for MIMO channel 108 in an effort to estimate potential crosstalk noise. Channel estimators 116 and 118 may estimate a plurality of channel impulse response values for MIMO channel 108. Channel estimators 116 and 118 may estimate a channel impulse response value between each transmitter and each receiver. Consequently, for a MIMO system with N transmitters and M receivers, N x M impulse responses should be obtained after the training phase. These channel impulse responses may then be used to construct a MIMO channel impulse response matrix. Accordingly, channel estimators 116 and 118 pass the channel impulse response values to CFMs 104 and 112, respectively. CFMs 104 and 112 may use the channel impulse response values to assist in creating an appropriate filter for suppressing the crosstalk noise. The channel estimate scheme may be discussed in more detail with reference to FIGS. 5-9.

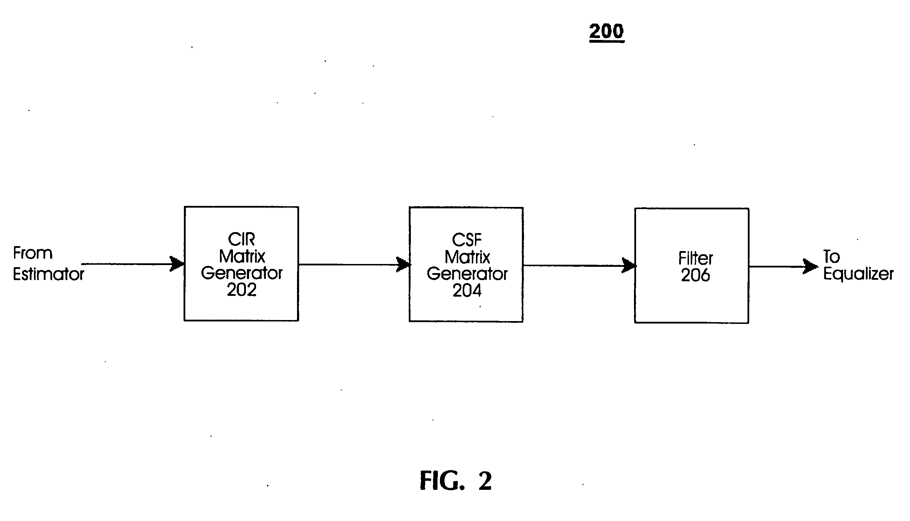

In one embodiment, for example, CFMs 104 and 112 may receive the CIR estimate from channel estimators 116 and 118, respectively. Each CFM may use the CIR estimate to synthesize or create a filter to assist in reducing or canceling crosstalk noise at a receiver coupled to MIMO channel 108. Therefore, in one embodiment the filter may be synthesized after the training phase. CFMs 104 and 112 may be discussed in more detail with reference to FIG. 2.

**Channel Filtering**

FIG. 2 may illustrate a CFM in accordance with one embodiment. FIG. 2 may illustrate a CFM 200. CFM may be representative of, for example, CFMs 104 and 112. In one embodiment, CFM 200 may comprise one or more modules. For example, in one embodiment 200 may comprise a channel impulse response (CIR) matrix generator 202, a crosstalk suppression filter (CSF) matrix generator 204, and a filter 206. Although these modules may be described by way of example, it can be appreciated that a greater or lesser number of modules may be used and still fall within the scope of the embodiments. Further, although the embodiment has been described in terms of "modules" to facilitate description, one or more circuits, components, registers, processors, software subroutines, or any combination thereof could be substituted for one, several, or all of the modules.

As shown in FIG. 2, CIR matrix generator 202 may receive one or more measured values (e.g., measured channel impulse responses) from a channel estimator, such as channel estimators 116 and 118. CIR matrix generator 202 may use the measured value(s) to construct a CIR matrix.

In one embodiment, the CIR matrix may represent a description of how a communication medium such as MIMO channel 108 alters the signal that is being transmitted between two endpoints, such as network nodes 120 and 122. With any practical channel the inevitable filtering effect will cause a spreading of individual data symbols passing through the communications channel. The CIR matrix attempts to characterize or describe how the propagation of a transmitted signal induces a signal at the receiver. It is possible to express the channel in terms of an impulse response, that is, the signal that would be received were an impulse to be transmitted. In one embodiment, for example, the CIR matrix may characterize MIMO channel 108 as a generic $N$-input and $M$-output MIMO system composed of $P$-tap finite impulse response (FIR) filters expressed in matrix form. Once the CIR matrix is generated, CIR matrix generator 202 may send the generated CIR matrix to CSF matrix generator 204.

In one embodiment, CSF matrix generator 204 may receive the CIR matrix. CSF matrix generator 204 may generate a CSF matrix using the received CIR matrix. The CSF matrix may represent a matrix filter constructed using the CIR values approximated by the FIR filters. The CSF matrix is synthesized using the CIR matrix in an attempt to reduce or eliminate crosstalk for MIMO channel 108. Once the CSF matrix is generated, CSF matrix generator 204 may send the generated CSF matrix to filter 206.

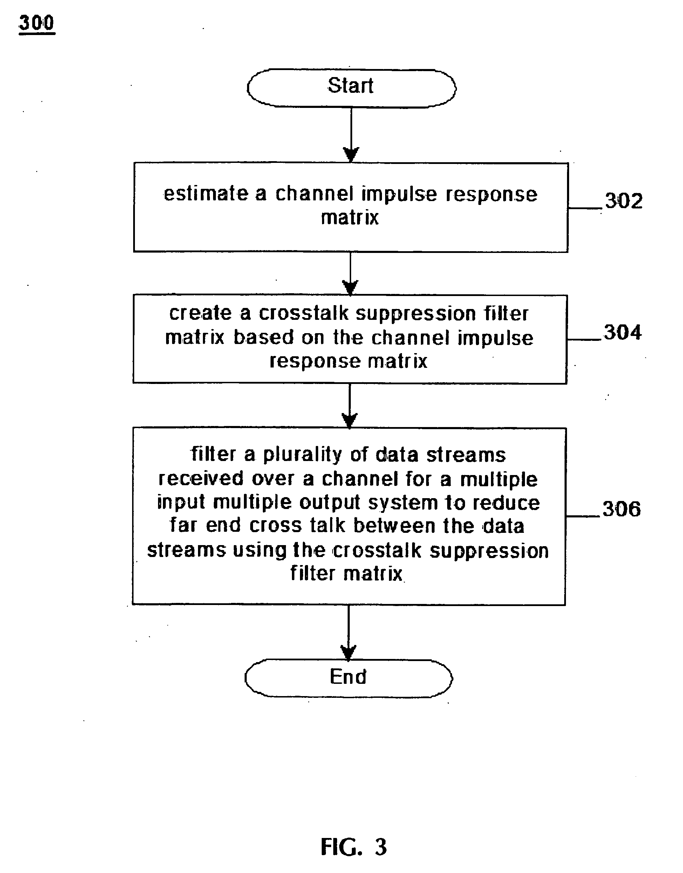

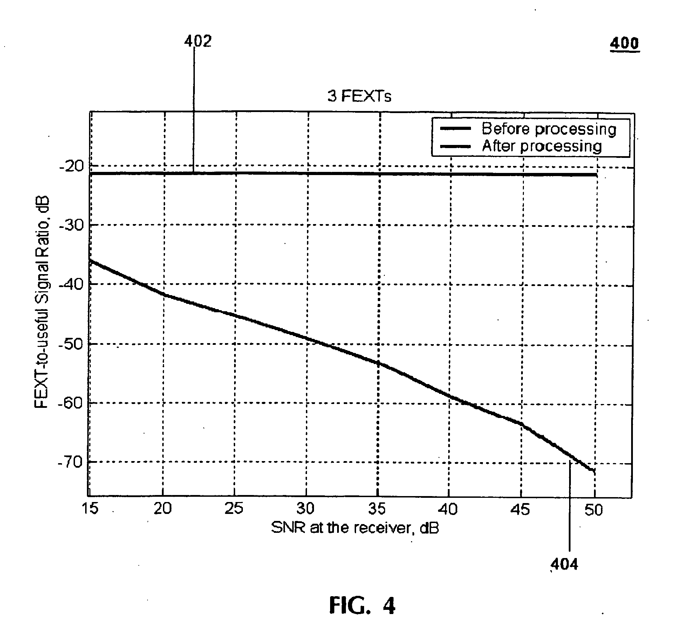

In one embodiment, filter 206 may receive the CSF matrix. Filter 206 may use the CSF matrix to filter crosstalk noise from one or more data streams communicated using MIMO channel 108. The CIR matrix, CSF matrix and filter 206 may be described in more detail with reference to FIGS. 3 and 4.

The operations of systems 100 and 200 may be further described with reference to FIGS. 3 and 4 and accompanying examples. Although the figures presented herein may include a particular programming logic, it can be appreciated that the programming logic merely provides an example of how the general functionality described herein can be implemented. Further, the given programming logic does not necessarily have to be executed in the order presented unless otherwise indicated. In addition, although the given programming logic may be described herein as being implemented in the above-referenced modules, it can be appreciated that the programming logic may be implemented anywhere within the system and still fall within the scope of the embodiments.

FIG. 3 illustrates a programming logic 300 for a CFM in accordance with one embodiment. As shown in programming logic 300, a CIR matrix may be estimated at block 302. A CSF matrix may be created based on the CIR matrix at block 304. The CIR matrix and CSF matrix may have a similar structure and matrix dimension. A plurality of data streams received over a channel for a MIMO system may be filtered using the CSF matrix to reduce crosstalk at block 306. The data streams may each comprise, for example, an ISI or non-ISI signal. The filtered data streams may then be equalized by one or more equalizers using the same or similar equalization parameters.

In one embodiment, the CIR matrix may be estimated by estimating at least one channel characteristic for the MIMO channel. A plurality of channel impulse response elements may be estimated based on the channel characteristic. The CIR matrix may be created using the channel impulse response elements.

The operation of systems 100 and 200, and the programming logic shown in FIGS. 3 and 4, may be better understood by way of example. As discussed previously, CFM 200 may estimate a CIR matrix, and then synthesize a CSF matrix for use in filtering crosstalk noise from a MIMO channel, such as MIMO channel 108. For purposes of this example, assume a bi-directional Gigabit Ethernet system having a MIMO channel with 4 inputs and 4 outputs, as shown in system 100. Consider the general case of a linear, dispersive, and noisy digital communication MIMO system with $m_0$ inputs and $m_0$ outputs. The signals at the $j$-th channel output ($1 \leq j \leq m_0$) have the standard form:

$$y_i(t) = \sum_{i=1}^{m_0} h_{ij}(t) \otimes s_j(t) + n_i(t) \qquad (1)$$

where $y_i(t)$-$i$-th channel output, $h_{ij}(t)$ -channel impulse response between the $j$-th input and the $i$-th output, $s_j(t)$- the $j$-th channel input signal, $n_i(t)$- noise at the $i$-th output.

In discrete form the equation (1) may be rewritten as follows:

$$y_i(k) = \sum_{j=1}^{m_0} \sum_{m=0}^{L_{ij}} h_{ij}(m) \cdot s_j(k-m) + n_i(k) ; \qquad (2)$$

where $h_{ij}(m)$ - tap gain coefficients of finite impulse response of the equivalent discrete-time channel between the $j$-th input and the $i$-th output, whose memory is denoted by $L_{ij}$, the $s_j(m)$ $n_i(m)$ $y_i(m)$ - are sampled versions of the $s_j(t)$, $n_i(t)$, $y_i(t)$ respectively.

By grouping the received signals from all $m_0$ channel outputs into a column vector $y(t)$ the equation (1) is expressed in matrix form:

$$\mathbf{y}(t) = \mathbf{H}(t) \otimes \mathbf{s}(t) + \mathbf{n}(t), \qquad (3)$$

where, $y(t)$ $m_0 \times 1$ vector of the received signals, $\mathbf{H}(t)$- is the $m_0 \times m_0$ MIMO channel impulse response matrix, $\mathbf{s}(t)$ - $m_0 \times 1$ vector of the transmitted signals, $\mathbf{n}(t)$-noise vector.

In discrete form the equation (3) can be written as following:

$$\mathbf{y}(k) = \sum_{m=0}^{v} \mathbf{H}(m)\mathbf{s}(k-m) + \mathbf{n}(k) \qquad (4)$$

where $v$ is the maximum length of all of the $m_0 \times m_0$ channel impulse responses, i.e., $v = \max_{i,j} L_{ij}$. Note that in these notations the non-diagonal elements of the CIR matrix $\mathbf{H}(t)$ represent the undesirable crosstalk impulse responses and introduce the unwanted interference (i.e., crosstalk) into useful signal from the adjacent pairs (or parallel spatial channels for wireless communication system) and these interferences are removed by CFM 200.

In this example, assume that system 100 reduces crosstalk noise by performing the following operations. As an initial matter, the overall channel characteristics of system 100 should be defined. Any given channel estimation technique may be used to define the channel characteristics. The particular channel estimation technique used for a given implementation may be defined by the level of crosstalk suppression desired, which in turn depends on the accuracy properties of estimate.

Once the channel estimation operation is fulfilled, the complete CIR matrix $\hat{\mathbf{H}}(t)$ may be constructed at the receiver end. This matrix may contain a set of CIR matrix values approximated by the FIR filters, which may be represented as follows:

$$\hat{\mathbf{H}}(t) = \begin{pmatrix} \hat{h}_{11}(t) & \cdots & \hat{h}_{1j}(t) & \cdots & \hat{h}_{1m_0}(t) \\ \vdots & \cdots & \vdots & \cdots & \vdots \\ \hat{h}_{i1}(t) & \cdots & \hat{h}_{ij}(t) & \cdots & \hat{h}_{im_0}(t) \\ \vdots & \cdots & \vdots & \cdots & \vdots \\ \hat{h}_{m_0 1}(t) & \cdots & \hat{h}_{m_0 j} & \cdots & \hat{h}_{m_0 m_0}(t) \end{pmatrix}. \qquad (5)$$

To suppress the crosstalk in each channel output, a crosstalk suppression filter $\mathbf{Q}(t)$ may be applied to process the received signals. This filter may be synthesized using the CIR matrix $\overset{\wedge}{\mathbf{H}}(t)$.

The algorithm of the crosstalk filter $\mathbf{Q}(t)$ calculation may comprise several stages. The following operations may calculate the elements $q_{ij}(t)$ $i, j = 1,...,m_0$ of the crosstalk suppression filter:

1. CIR matrix $\overset{\wedge}{\mathbf{H}}(t)$ may be transposed. The transpose of the CIR matrix may be calculated by interchanging rows and columns.

2. Each element of the obtained matrix may be substituted on its minor. During a minor calculation the convolution operation is applied instead of the multiplication operation.

3. The sign for the minor values may be determined. The sign for the minor values may change from + (plus) to - (minus) for minors with the odd sum of indexes.

As a result of the above operations, a $m_0 \times m_0$ crosstalk suppression filter(s) may be constructed.

Obtained such way the matrix $\mathbf{Q}(t)$ comprises the crosstalk suppression filter. As shown above, the performance of the crosstalk suppression filter may rely upon the measured channel characteristics. Assuming perfect channel knowledge, CFM 200 may completely eliminate crosstalk noise from MIMO channel 108. In the noise-free channel the output of the crosstalk suppression filter can be written as:

$$\mathbf{x}(t) = \mathbf{Q}(t) \otimes \mathbf{y}(t) = \mathbf{Q}(t) \otimes \mathbf{H}(t) \otimes \mathbf{s}(t) = \mathbf{G}(t) \otimes \mathbf{s}(t) \tag{6}$$

where $m_0 \times m_0$ matrix filter $\mathbf{G}(t)$ has the diagonal form with the same elements g(t) on the main diagonal. Therefore the outputs of the matrix crosstalk suppression filter are crosstalk-free signals:

$$x_j(t) = g(t) \otimes s_j(t). \tag{7}$$

To further describe the operation of system 100, consider a lesser complex case of a MIMO system having two inputs and two outputs, without noise. In this case equation (1) gives the relationship between input and output signals in the form

$$
\begin{aligned}
y_1(t) &= h_{11}(t) \otimes s_1(t) + h_{12}(t) \otimes s_2(t); \\
y_2(t) &= h_{21}(t) \otimes s_1(t) + h_{22}(t) \otimes s_2(t);
\end{aligned}
\tag{8}
$$

The CIR matrix may be represented as $\mathbf{H}(t) = \begin{bmatrix} h_{11}(t) & h_{12}(t) \\ h_{21}(t) & h_{22}(t) \end{bmatrix}$. Assuming perfect channel estimation, the crosstalk suppression filter may be represented as $\mathbf{Q}(t) = \begin{bmatrix} h_{22}(t) & -h_{12}(t) \\ -h_{21}(t) & h_{11}(t) \end{bmatrix}$. The output signals of this filter may be described by the following equation:

$$
\begin{aligned}
x_1(t) &= \left[ h_{22}(t) \otimes h_{11}(t) - h_{12}(t) \otimes h_{21}(t) \right] \otimes s_1(t) \\
x_2(t) &= \left[ h_{11}(t) \otimes h_{22}(t) - h_{21}(t) \otimes h_{12}(t) \right] \otimes s_2(t)
\end{aligned}
\tag{9}
$$

As seen from equation (9), the output signals may be crosstalk-free signals. Note that the complete impulse responses of both outputs are approximately equal. This means that the same equalizers may be applied at the output of the crosstalk suppression filter.

FIG. 4 is a graph illustrating the performance of a CFM in accordance with one embodiment. FIG. 4 may illustrate the performance of a CFM using a MIMO channel comprising unshielded twisted pair copper medium CAT-5 cable. FIG. 4 was plotted for an Ethernet LAN system having 4 pairs of twisted pair cable. In such a system, free transmitters may simultaneously induce crosstalk at the receiver end. A curve 402 illustrates the total crosstalk to useful signal ratio before using a CFM. A curve 404 illustrates the total crosstalk to useful signal ratio after using a CFM. As illustrated by FIG. 4, the use of a CFM provides crosstalk suppression such that the residual crosstalk noise is less than the channel noise floor.

## Channel Estimation

As discussed previously, channel estimators 116 and 118 may use a channel estimation technique to estimate one or more characteristics of a channel, such as MIMO channel 108. For example, channel estimators 116 and 118 may estimate a CIR estimate. The CIR estimate may then be used by a crosstalk filtering module, such as CFM 104 and CFM 112, to synthesize a filter to assist in reducing or canceling crosstalk noise at a receiver coupled to MIMO channel 108. The performance of the CFM may increase in accordance with the accuracy of the CIR estimate. FIGS. 5-9 discuss such an improved channel estimate technique.

In one embodiment, channel estimators 116 and 118 may use a channel estimation technique comprising a threshold scheme for training-based channel estimation. A CIR estimate may be found by estimating a ML estimate, and then refining or improving the ML estimate using a threshold scheme. The result is an improved CIR estimate for a MIMO channel, such as MIMO channel 108.

The ML estimate is known to be a minimum-variance unbiased estimate. The ML estimate, however, may be unsatisfactory for a number of reasons. For example, the ML estimate of a channel does not provide a channel length L. In the absence of a predetermined channel length, the ML estimate may use the maximum possible channel length. The real channel, however, can often be shorter then the maximum possible channel length. In this case, the ML estimate may have false taps due to channel noise. The impact of false taps on the accuracy of the CIR estimate will increase as the difference between the length of the real channel and maximum possible channel length increases. In another example, the ML estimate may provide a minimum variance of estimate error if the noise is Gaussian white noise. In practice, however, the background channel noise can be different from Gaussian white noise. For example, the alien noise in cable bundles does not comprise Gaussian white noise since it is induced by signals from other cables.

One embodiment may comprise a channel estimate scheme to compensate for these and other problems. The channel estimate scheme may use a threshold scheme to refine an ML estimate. As a result, channel estimators 116 and 118 may generate a more accurate CIR estimate relative to existing techniques. The CIR estimate may be used to reduce crosstalk noise in a communication system using a MIMO channel, such as MIMO channel 108.

FIG. 5 illustrates a block diagram of a channel estimator in accordance with one embodiment. FIG. 5 illustrates a channel estimator 500. In one embodiment, channel estimator 500 may be representative of, for example, channel estimator 116 and 118. Channel estimator 500 may comprise a plurality of modules. Although these modules may be described by way of example, it can be appreciated that a greater or lesser number of modules may be used and still fall within the scope of the embodiments. Further, although the embodiment has been described in terms of "modules" to facilitate description, one or more circuits, components, registers, processors, software subroutines, or any combination thereof could be substituted for one, several, or all of the modules.

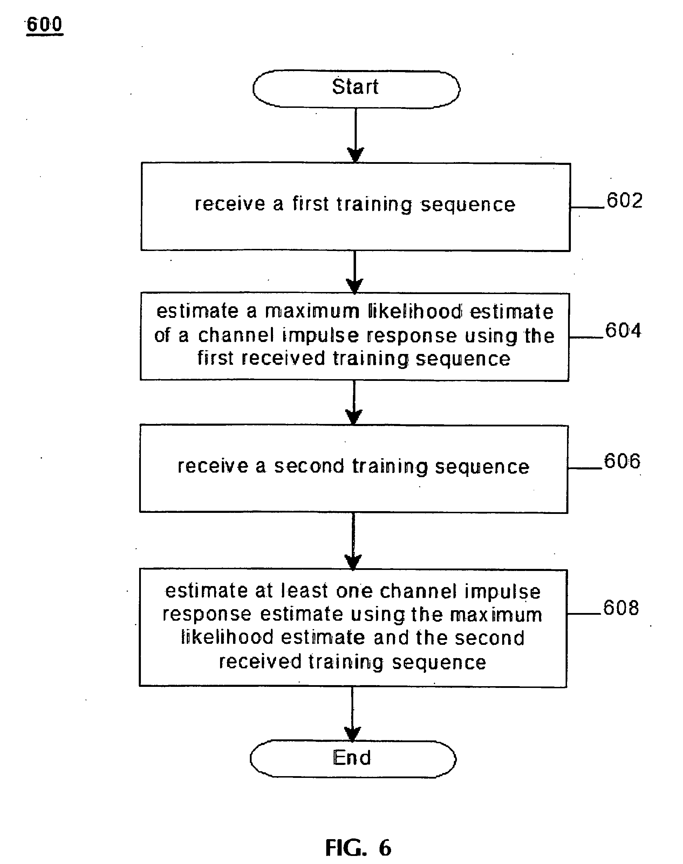

Channel estimator 500 may comprise a ML estimator 520. ML estimator 520 may further comprise a filter 502 connected to a matrix transformer 504. ML estimator 520 may have access to a training sequence (TS) table 506. ML estimator 520 may also be connected to a threshold generator 508 and a candidate CIR generator 510, both of which are connected to each other. Candidate CIR generator 510 may be connected to a filter 512. Filter 512 may also access TS table 506. Filter 512 may be connected to a distance calculator 514. Distance calculator 514 may be connected to a minimum selector 516. Minimum selector 516 may be connected to CIR selector 518. The operation of channel estimator 500 may be further described with reference to FIGS. 6-9.

FIG. 6 is a block flow diagram of the programming logic performed by a channel estimator in accordance with one embodiment. FIG. 6 illustrates a programming logic 600. Programming logic 600 may illustrate operations to perform channel estimation. For example, a first training sequence may be received at block 602. A ML estimate of a channel impulse response may be estimated using the first received training sequence at block 604. A second training sequence may be received at block 606. At least one CIR estimate may be estimated using the ML estimate and the second received training sequence at block 608.

The ML estimate may be estimated by filtering the first received training sequence using a filter. The filter may be matched to the first received training sequence. The output of the filter may be a first set of vectors for a matrix. The matrix may be transformed to form the ML estimate.

The CIR estimate may be estimated by receiving the ML estimate. A set of threshold values may be generated using the ML estimate. A set of candidate CIR estimate vectors may be generated using the threshold values. A CIR estimate may be selected from the candidate CIR estimate vectors.

The set of threshold values may be generated by solving the following equation;

$$t_j \cong \frac{\max\limits_{k=0,L-1}\left|\hat{h}_k^{ML}\right|}{N} j$$

where $\mathbf{t} = [t_1,...,t_N]$ is a set of thresholds, $j = 1,...,N$, $L$ represents a channel impulse response length, $\hat{\mathbf{h}}^{ML}$ represents said ML estimate, $\hat{h}_k^{ML}$ represents the k-th tap of ML estimate of said channel impulse response, and $k = 0,...,L-1$.

the candidate CIR estimate vectors may be generated by solving the following equation:

$$\hat{h}_k^{(j)} = \begin{cases} \hat{h}_k^{ML}, \text{if } \left|\hat{h}_k^{ML}\right| \geq t_j \\ 0, \quad \text{if } \left|\hat{h}_k^{ML}\right| < t_j \end{cases}$$

where $\hat{\mathbf{h}}^{(j)} = [\hat{\mathbf{h}}^{(1)},...,\hat{\mathbf{h}}^{(N)}]$ is a set of candidate CIR estimates $j = 1,...,N$, $\hat{h}_k^{(j)}$ is k-th tap of j-th candidate CIR estimate vectors, $\mathbf{t} = [t_1,...,t_N]$ is a set of thresholds, and $\hat{\mathbf{h}}^{ML}$ represents said ML estimate.

The CIR estimate may be selected from the candidate CIR estimate vectors. The first received training sequence, which is known to the receiver, may be filtered using the candidate CIR estimate vectors to form a second set of vectors. A set of distance values between the second set of vectors and the second received training sequence may be determined. A minimum distance value may be selected from the set of distance values. The CIR estimate vector may be selected using the minimum distance value.

The CIR estimate may be used to filter crosstalk from a communication channel, such as MIMO channel 108, for example. The CIR estimate may be received at a CFM to form a CIR matrix. A CSF matrix may be created based on the CIR matrix. A plurality of data streams received over a channel for a MIMO output system may be filtered to reduce crosstalk between the data streams using the CSF matrix.

The operation of system 500, and the programming logic shown in FIG. 6, may be better understood by way of example. Continuing with the example described with reference to FIGS. 1-3, CFM 200 may estimate a CIR matrix, and then synthesize a CSF matrix for use in filtering crosstalk noise from a MIMO channel, such as MIMO channel 108. The CIR matrix may be estimated using a CIR estimate generated by channel estimator 500.

In this example, channel estimator 500 may implement a threshold scheme for training-based channel estimation. The CIR estimate may be derived from an ML estimate. Once the ML estimate is generated, it may be improved using a threshold technique. Since the scheme is training-based, the CIR estimate may be obtained using a known training sequence and its corresponding observations. In one embodiment, the threshold scheme transmits and receives the same training sequence at least twice. The training sequence may be a known training sequence optimal used for ML estimation.

The received symbols of the TS transmitted for the first time are:

$$y_i^{(1)} = \sum_{k=0}^{L-1} s_{i-k+L-1} h_k + n_i^{(1)}, \qquad i = 1,\dots,M-L+1 \tag{10}$$

where $s_j$ ($j = 1,...,M$) is the symbol for the training sequence, $h_k$ ($k = 0,...,L-1$) is the tap of CIR, $L$ is the CIR length and $n_i^{(1)}$ is the sample of the additive channel noise.

The received symbols of the training sequence transmitted for the second time are:

$$y_i^{(2)} = \sum_{k=0}^{L-1} s_{i-k+L-1} h_k + n_i^{(2)}, \qquad i = 1,\ldots,M-L+1 \tag{11}$$

where $n_i^{(2)}$ is the other realization of the channel noise.

By comparing equations (10) and (11) it can be seen that the received training sequences differ principally in noise realizations. This may be particularly useful when evaluating threshold technique performance as discussed further below.

Equation (10) can be rewritten in a matrix-vector form as:

$$\mathbf{y}^{(1)} = \mathbf{Sh} + \mathbf{n}^{(1)} \tag{12}$$

where $\mathbf{h} = [h_0,\ldots,h_{L-1}]^T$ is unknown CIR, that should be estimated, and $\mathbf{n}^{(1)}$ is the noise vector, $\mathbf{S}$ is $(M\text{-}L + 1) \times L$ -dimensional matrix with entries $S_{ij} = S_{L+(i\text{-}j)}$, $\mathbf{y}^{(1)}$ is the vector of the received signals.

The first received training sequence $\mathbf{y}^{(1)}$ is used to obtain the maximum-likelihood estimate (MLE) of the CIR $\mathbf{h}$. Using notations (12) the ML estimate of CIR is given by [10, 11]:

$$\hat{\mathbf{h}}^{ML} = (\mathbf{S}^T\mathbf{S})^{-1}\mathbf{S}^T\mathbf{y}^{(1)}$$

$$\tag{13}$$

Referring again to FIG. 5, filter 502 of ML estimator 520 receives a first training sequence. The first vector $\mathbf{S}^T\mathbf{y}^{(1)}$ is found as the output of filter 502. Filter 502 may be a filter appropriately matched to the training sequence. Matrix transformer 504 receives the output of filter 502, and applies the matrix transformation $(\mathbf{S}^T\mathbf{S})^{-1}$. Matrix $(\mathbf{S}^T\mathbf{S})^{-1}$ is a function of only the first received training sequence, and therefore it may be known at the receiver and pre-computed accordingly. The output of ML estimator 520 is the ML estimate $\hat{\mathbf{h}}^{ML}$.

After the ML estimate $\hat{\mathbf{h}}^{ML}$ of the CIR is obtained, threshold generator 508 generates the set of thresholds $\mathbf{t} = [t_1,\ldots,t_N]$ in accordance with the following equation:

$$t_j = \frac{\max\limits_{k=0,L-1}\left|\hat{h}_k^{ML}\right|}{N} j, \qquad j = 1,\ldots,N \tag{14}$$

Candidate CIR generator 510 may receive the set of thresholds and use them to form the set of CIR estimates $[\hat{\mathbf{h}}^{(1)},\ldots,\hat{\mathbf{h}}^{(N)}]$. Each estimate $\hat{\mathbf{h}}^{(j)}$ may be obtained using the following rule:

$$\hat{h}_k^{(j)} = \begin{cases} \hat{h}_k^{ML}, & \text{if } \left|\hat{h}_k^{ML}\right| \geq t_j \\ 0, & \text{if } \left|\hat{h}_k^{ML}\right| < t_j \end{cases} \qquad j = 1,\ldots,N\,;\ k = 0,\ldots,L-1 \tag{15}$$

Candidate CIR generator 510 then outputs the generated set of $N$ CIR estimates. The CIR estimates may be in the form of vectors, for example.

Channel estimator 500 may then proceed to select the best CIR estimate from the set of generated CIR estimates. Filter 512 may receive the candidate CIR estimates and convolute each one with the training sequence in accordance with the following equation:

$$b_i^{(j)} = \sum_{k=0}^{L-1} s_{i-k+L-1} \hat{h}_k^{(j)} \quad j = 1,\ldots,N \,; \, i = 1,\ldots,M-L+1 \qquad (16)$$

Thus the set of vectors $[\mathbf{b}^{(1)},\ldots,\mathbf{b}^{(N)}]$ may be generated.

Distance calculator 514 may receive the set of vectors $[\mathbf{b}^{(1)},\ldots,\mathbf{b}^{(N)}]$ and calculate the distances $[d_1,\ldots,d_N]$ between the obtained vectors $[\mathbf{b}^{(1)},\ldots,\mathbf{b}^{(N)}]$ and the second received training sequence $\mathbf{y}^{(2)}$ in accordance with the following equation:

$$d_j = \left\| \mathbf{b}^{(j)} - \mathbf{y}^{(2)} \right\| \qquad j = 1,\ldots,N \qquad (17)$$

Minimum selector 516 may receive the distances $[d_1,\ldots,d_N]$ between the obtained vectors, and select the vector $\mathbf{b}^{(j_0)}$, which has the minimum distance $d_{j_0}$ in accordance with the following equation:

$$j_0 = \arg\min_j d_j$$

$$(18)$$

The value $d_{j_0}^2$ has a sense of the minimal residual power, which is the sum of the residual power of training sequence and the noise power. CIR selector 518 generates the final estimate $\hat{\mathbf{h}}$ of CIR in accordance with $\hat{\mathbf{h}} = \hat{\mathbf{h}}^{(j_0)}$, which provides the most accurate estimate from the generated set.

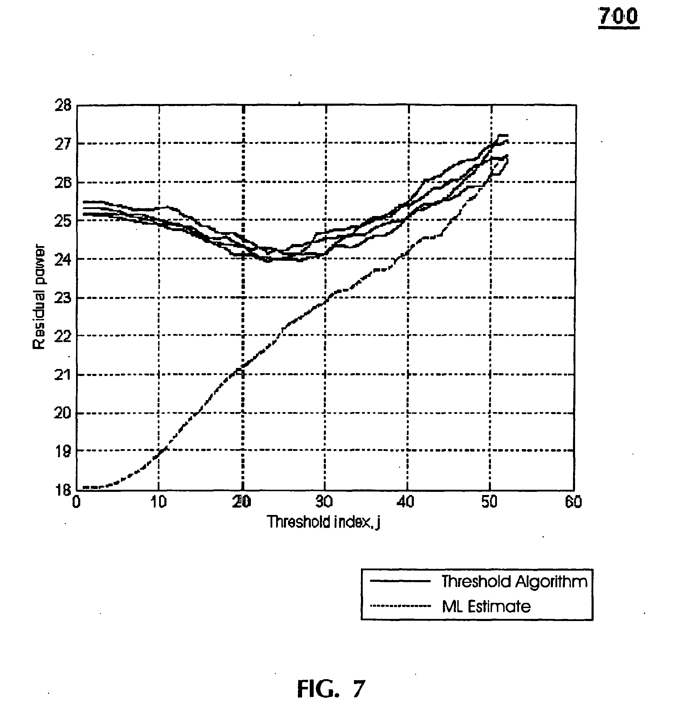

FIG. 7 is a first graph illustrating the performance of a channel estimator in accordance with one embodiment. FIG. 7 illustrates a graph 700. Graph 700 may show an example of the relation between residual power $d_j^2$ and the threshold index $j$. The lower index corresponds to the smaller threshold. The dotted curve illustrates the case when the distance $d_j$ is calculated as $d_j = \|\mathbf{b}^{(j)} - \mathbf{y}^{(1)}\|$ instead of (17). In this case the minimal distance may not be found, because $\mathbf{y}^{(1)}$ was used for obtaining of the ML CIR estimate. The solid curves relate to the case when $d_j$ is calculated as (17). Due to other noise realization the minimal distance can always be found.

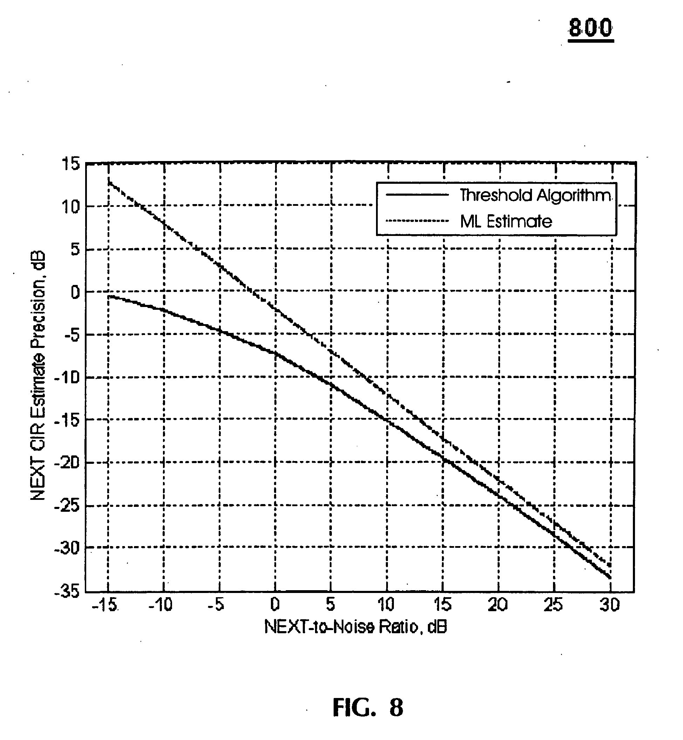

FIG. 8 is a second graph illustrating the performance of a channel estimator in accordance with one embodiment. FIG. 8 illustrates a graph 800. Graph 800 may show an estimated precision of impulse responses for NEXT of UTP cable using both ML estimation and ML estimation improved using the threshold scheme. For purposes of this example, the training sequence length may be 3047 and the CIR length is 1024. As shown in FIG. 8, the ML estimation modified using the threshold technique provides a more accurate CIR estimate than the ML estimation technique used alone, particularly for low signal-to-noise ratios.

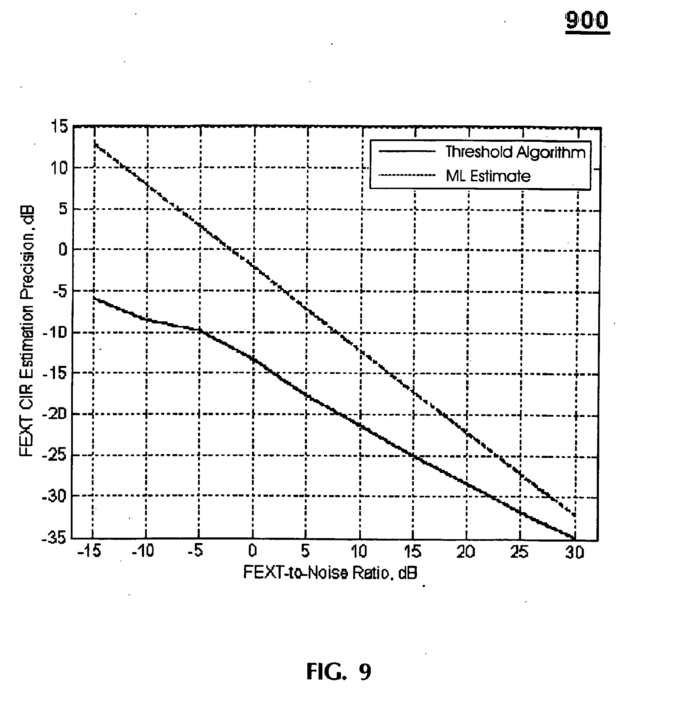

FIG. 9 is a third graph illustrating the performance of a channel estimator in accordance with one embodiment. FIG. 9 illustrates a graph 900. Graph 900 may show an estimated precision of impulse responses for FEXT of UTP cable using both ML estimation and ML estimation improved using the threshold scheme. Assuming the same training sequence length of 3047 and CIR length of 1024, graph 900 illustrates the greater accuracy of the ML estimation technique modified using the threshold scheme relative to the ML estimation technique used alone.

In accordance with a variation of the channel estimation technique described above, another embodiment may further refine the final CIR estimate in an attempt to get an improved final CIR estimate. Once the first final CIR estimate is obtained as previously described, the channel estimation technique may be repeated a second time to yield a second final CIR estimate. During the second iteration, however, the first and the second received training sequences may be swapped. For example, a second ML estimate may be obtained during the second iteration using the second received training sequence. The second ML estimate may be used to generate a second set of thresholds, candidate CIR estimates and vectors. A set of distances may be calculated between the second set of generated vectors and the first received training sequence. The minimal distance may be used to select the second final CIR estimate from the second generated set of candidate CIR estimates. The first and second final CIR estimates may then be averaged together to find a refined final CIR estimate.

In accordance with another variation of the channel estimation technique described above, another embodiment may use more than two received training sequences to generate the final CIR estimate. For example, in one embodiment the receiver may receive $M$ training sequences, where $M \geq 2$. An $i$-th final CIR estimate may be obtained for every received training sequence. This may be accomplished by obtaining an ML estimate of the CIR using the $i$-th received training sequence. A set of thresholds may be generated using the ML estimate. The set of thresholds may be used to generated a set of candidate CIR estimates. A set of vectors may be generated by filtering the training sequence through the candidate CIR estimates. An averaged received training sequence may be found by averaging the other M-1 received training sequences, where all received training sequences except the last are used to find the average. A set of distances may be calculated between the averaged training sequence and the set of vectors. A minimum distance may be found from the set of distances. The $i$-th final CIR estimate may be selected from the set of candidate CIR estimates which corresponds to the minimum distance. The final CIR estimate may be found by averaging the $M$ final CIR estimates.

The embodiments may be implemented using an architecture that may vary in accordance with any number of factors, such as desired computational rate, power levels, heat tolerances, processing cycle budget, input data rates, output data rates, memory resources, data bus speeds and other performance constraints. For example, one embodiment may be implemented using software executed by a processor. The processor may be a general-purpose or dedicated processor, such as a processor made by Intel® Corporation, for example. The software may comprise computer program code segments, programming logic, instructions or data. The software may be stored on a medium accessible by a machine, computer or other processing system. Examples of acceptable mediums may include computer-readable mediums such as read-only memory (ROM), random-access memory (RAM), Programmable ROM (PROM), Erasable PROM (EPROM), magnetic disk, optical disk, and so forth. In one embodiment, the medium may store programming instructions in a compressed and/or encrypted format, as well as instructions that may have to be compiled or installed by an installer before being executed by the processor. In another example, one embodiment may be implemented as dedicated hardware, such as an Application Specific Integrated Circuit (ASIC), Programmable Logic Device (PLD) or Digital Signal Processor (DSP) and accompanying hardware structures. In yet another example, one embodiment may be implemented by any combination of programmed general-purpose computer components and custom hardware components. The embodiments are not limited in this context.

## Claims

1. A method of performing channel estimation, comprising:

    receiving a first training sequence (602);
    generating a first estimate of a channel impulse response using a first received training sequence (604);
    receiving a second training sequence (606); and
    calculating a revised channel impulse response estimate using said first estimate and a second received training sequence (608);

    **characterised in that:**

    said first estimate of the channel impulse response is a maximum likelihood estimate;
    the first training sequence is the same as the second training sequence; and
    the step of calculating said revised channel impulse response estimate comprises:

        receiving said maximum likelihood estimate;
        generating a set of threshold values using said maximum likelihood estimate;
        generating a set of candidate channel impulse response estimate vectors using said threshold values; and
        selecting said revised channel impulse response estimate from said candidate channel impulse response estimate vectors.

2. The method of claim 1, wherein generating said maximum likelihood estimate comprises:

    filtering said first received training sequence using a filter matched to said first received training sequence to form a first set of vectors for a matrix; and
    transforming said matrix to form said maximum likelihood estimate.

3. The method of claim 1, wherein said set of threshold values is generated by solving the following equation:

$$t_j = \frac{\max\limits_{k-0.L-1}\left|\hat{h}_k^{ML}\right|}{N} j$$

where $\mathbf{t}=[t_1...t_N]$ is a set of thresholds, $j$ = 1,...,N. L represents channel impulse response length, $\hat{\mathbf{h}}^{ML}$ represents said maximum likelihood estimate, $\hat{h}_k^{ML}$ represents the k-th Lap of the maximum likelihood estimate of said channel impulse response, and $k$ = 0,...,$L$-1.

4. The method of claim 1, wherein said set of candidate channel impulse response estimate vectors is generated by solving the following equation:

$$\hat{h}_k^{(j)} = \begin{cases} \hat{h}_k^{ML}, \text{if } \left|\hat{h}_k^{ML}\right| \geq t_j \\ 0, \quad \text{if } \left|\hat{h}_k^{ML}\right| < t_j \end{cases}$$

where $\hat{\mathbf{h}}^{(j)} = [\hat{\mathbf{h}}^{(1)},...,\hat{\mathbf{h}}^{(N)}]$ is a set of candidate channel impulse response estimate vectors, $j$ = 1, ..., N. $\hat{h}_k^{(j)}$ is the k-th tap of the j-th candidate channel impulse response estimate vector, $\mathbf{t}=[t_1,...,t_N]$ is the set of thresholds, and $\hat{\mathbf{h}}^{ML}$ represents said maximum likelihood estimate.

5. The method of claim 1, wherein said selecting said revised channel impulse response estimate from said candidate channel impulse response estimate vectors comprises:

   filtering said first received training sequence using said candidate channel impulse response estimate vectors to form a second set of vectors;
   determining a set of distance values between said second set of vectors and said second received training sequence;
   selecting a minimum distance value from said set of distance values; and
   selecting said revised channel impulse response estimate using said minimum distance value.

6. The method of claim 1, further comprising:

   receiving said revised channel impulse response estimate at a crosstalk filtering module to form a channel impulse response matrix (302);
   creating a crosstalk suppression filter matrix based on said revised channel impulse response matrix (304); and
   filtering a plurality of data streams received over a channel for a multiple input multiple output system to reduce crosstalk between said data streams using said crosstalk suppression filter matrix (306).

7. The method of claim 1, further comprising:

   generating a second maximum likelihood estimate of the channel impulse response using said second received training sequence;
   calculating a second revised channel impulse response estimate using said second maximum likelihood estimate and said first received training sequence; and
   averaging said revised channel impulse response estimates to calculate an averaged revised channel impulse response estimate.

8. The method of claim 1, further comprising:

   receiving a further plurality of training sequences;
   calculating a plurality of channel impulse response estimates according to the aforementioned method using said plurality of training sequences; and

averaging said plurality of channel impulse response estimates to calculate an averaged channel impulse response estimate.

9. A system for performing channel estimation, comprising:

a first estimator (520) operable to receive a first training sequence and generate a first estimate using a first received training sequence; and
a channel tap estimator coupled to said first estimator operable to receive said first estimate and a second training sequence and calculate a revised channel impulse response estimate using said first estimate and a second received training sequence;

**characterised in that:**

said first estimator (520) is a maximum likelihood estimator and said first estimate is a maximum likelihood estimate;
the first training sequence is the same as the second training sequence; and
said channel tap estimator comprises:

a threshold generator (508) operable to receive said maximum likelihood estimate and generate a set of threshold values using said maximum likelihood estimate;
a candidate channel impulse response generator (510) operable to receive said threshold values and generate a set of candidate channel impulse response estimate vectors using said threshold values; and
a channel impulse response selector (518) operable to receive said candidate channel impulse response estimate vectors and a minimum distance value and select said revised channel impulse response estimate from said candidate channel impulse response estimate vectors according to the minimum value.

10. The system of claim 9, wherein said maximum likelihood estimator (520) comprises:

a filter (502) operable to receive and filter said first received training sequence to form a first set of vectors for a matrix; and
a matrix transformer (504) operable to transform said matrix to form said maximum likelihood estimate.

11. The system of claim 9, further comprising:

a filter (512) operable to receive said training sequence and said candidate channel impulse response estimate vectors and filter said training sequence using said candidate channel impulse response estimate vectors to form a second set of vectors;
a distance calculator (514) operable to receive the second received training sequence and said second set of vectors and determine a set of distance values between said second set of vectors and said second received training sequence; and
a minimum selector (516) operable to receive said set of distance values, select a minimum distance value from said set of distance values and output said minimum distance value to said channel impulse response selector (518).

12. The system of claim 9, further comprising:

a communications medium;
a plurality of transmitters (106) operable to connect to said communications medium. Each transmitter operable to transmit a data stream over said communications medium using a communications channel (108);
a plurality of receivers (110) operable to connect to said communications medium and receive said data streams from said communications channel (108); and
a crosstalk filtering module (112) operable to connect to said plurality of receivers (110), receive and use said revised channel impulse response estimate to filter said data streams to reduce crosstalk signals incurred by said data streams during said transmission.

13. The system of claim 12, further comprising a plurality of equalizers (114) operable to connect to said filtering module and equalize said filtered data streams using a set of substantially similar equalization parameters.

**14.** The system of claim 12, wherein said crosstalk filtering module comprises:

a channel impulse response matrix generator (202) operable to generate a channel impulse response matrix;
a crosstalk suppression filter matrix generator (204) operable to generate a crosstalk suppression filter matrix using said channel impulse response matrix; and
a filter (206) operable to filter said data streams using said crosstalk suppression filter matrix.

**15.** A storage medium which stores machine-implementable instructions for causing a processor to execute a method as claimed in any one of claims 1 to 8.

**Patentansprüche**

**1.** Verfahren zum Ausführen von Kanalschätzung, umfassend:

Empfangen einer ersten Trainingssequenz (602),
Erzeugen einer ersten Schätzung einer Kanalimpulsantwort mittels einer ersten empfangenen Trainingssequenz (604),
Empfangen einer zweiten Trainingssequenz (606), und
Berechnen einer verbesserten Kanalimpulsantwortschätzung mittels der ersten Schätzung und einer zweiten empfangenen Trainingssequenz (608),

**dadurch gekennzeichnet, daß**
die erste Schätzung der Kanalimpulsantwort eine Maximum-Likelihood-Schätzung ist,
die erste Trainingssequenz die gleiche wie die zweite Trainingssequenz ist, und
das Berechnen der verbesserten Kanalimpulsantwortschätzung umfaßt:

Empfangen der Maximum-Likelihood-Schätzung,
Erzeugen einer Menge von Schwellenwerten mittels der Maximum-Likelihood-Schätzung,
Erzeugen einer Menge von Kandidatenvektoren für Kanalimpulsantwortschätzungen mittels der Schwellenwerte, und
Auswählen der verbesserten Kanalimpulsantwortschätzung aus den Kandidatenvektoren für Kanalimpulsantwortschätzungen.

**2.** Verfahren nach Anspruch 1, wobei das Erzeugen der Maximum-Likelihood-Schätzung umfaßt:

Filtern der ersten empfangenen Trainingssequenz mittels eines Filters, der auf die erste empfangene Trainingssequenz abgestimmt ist, um eine erste Menge von Vektoren für eine Matrix zu bilden, und
Transformieren der Matrix, um die Maximum-Likelihood-Schätzung zu bilden.

**3.** Verfahren nach Anspruch 1, wobei die Menge von Schwellenwerten durch das Lösen der folgenden Gleichung erzeugt wird:

$$t_j = \frac{\max\limits_{k=0,L-1}\left|\hat{h}_k^{ML}\right|}{N} j,$$

wobei $\mathbf{t}=[t_1,...,t_N]$ eine Menge von Schwellenwerten ist, j = 1,...,N, L die Länge der Kanalimpulsantwort darstellt, $\hat{\mathbf{h}}^{ML}$ die Maximum-Likelihood-Schätzung darstellt, $h_k^{ML}$ die k-te Stelle der Maximum-Likelihood-Schätzung der Kanalimpulsantwort darstellt und k = 0,...L-1 ist.

**4.** Verfahren nach Anspruch 1, wobei die Menge von Kandidatenvektoren für Kanalimpulsantwortschätzungen durch das Lösen der folgenden Gleichung erzeugt wird:

$$\hat{h}_k^{(j)} = \begin{cases} \hat{h}_k^{ML}, & \text{if } \left|\hat{h}_k^{ML}\right| \geq t_j \\ 0, & \text{if } \left|\hat{h}_k^{ML}\right| < t_j \end{cases}$$

wobei $\hat{\mathbf{h}}^{(j)} = [\hat{\mathbf{h}}^{(I)},...,\hat{\mathbf{h}}^{(N)}]$ eine Menge von Kandidatenvektoren für Kanalimpulsantworten ist, $j = 1,...,N$, $\hat{\mathbf{h}}_k^{(j)}$ die k-te Stelle des j-ten Kandidatenvektors für Kanalimpulsantwortschätzungen ist, $\mathbf{t} = [t_1,...,t_N]$ die Menge von Schwellenwerten ist und $\hat{\mathbf{h}}^{ML}$ die Maximum-Likelihood-Schätzung darstellt.

5. Verfahren nach Anspruch 1, wobei das Auswählen der verbesserten Kanalimpulsantwortschätzung aus den Kandidatenvektoren für Kanalimpulsantwortschätzungen umfaßt:

  Filtern der ersten empfangenen Trainingssequenz mittels der Kandidatenvektoren für Kanalimpulsantwortschätzungen, um eine zweite Menge von Vektoren zu bilden,
  Bestimmen einer Menge von Abstandswerten zwischen der zweiten Menge von Vektoren und der zweiten empfangenen Trainingssequenz,
  Auswählen eines minimalen Abstandswerts aus der Menge von Abstandswerten, und
  Auswählen der verbesserten Kanalimpulsantwortschätzung mittels des minimalen Distanzwerts.

6. Verfahren nach Anspruch 1, ferner umfassend:

  Empfangen der verbesserten Kanalimpulsantwortschätzung in einem Crosstalk-Filtermodul um eine Kanalimpulsantwortmatrix (302) zu bilden,
  Schaffen einer Crosstalk-Unterdrückungsfiltermatrix auf der Grundlage der verbesserten Kanalimpulsantwortmatrix (304), und
  Filtern mehrerer über einen Kanal für ein Mehrfacheingabe-Mehrfachausgabe-System empfangener Datenstreams, um Crosstalk zwischen den Datenstreams mittels der Crosstalkunterdrückungsfiltermatrix (306) zu verringern.

7. Verfahren nach Anspruch 1, ferner umfasssend:

  Erzeugen einer zweiten Maximum-Likelihood-Schätzung der Kanalimpulsantwort mittels der zweiten empfangenen Trainingssequenz,
  Berechnen einer zweiten verbesserten Kanalimpulsantwortschätzung mittels der zweiten Maximum-Likelihood-Schätzung und der ersten empfangenen Trainingssequenz, und
  Mitteln der verbesserten Kanalimpulsantwortschätzungen, um eine gemittelte verbesserte Kanalimpulsantwortschätzung zu berechnen.

8. Verfahren nach Anspruch 1, ferner umfassend:

  Empfangen weiterer mehrerer Trainingssequenzen,
  Berechnen mehrerer Kanalimpulsantwortschätzungen nach dem zuvor beschriebenen Verfahren mittels der mehreren Trainingssequenzen, und
  Mitteln der mehreren Kanalimpulsantwortschätzungen, um eine gemittelte Kanalimpulsantwortschätzung zu berechnen.

9. System zum Ausführen von Kanalschätzung, umfassend
  eine erste Schätzeinrichtung (520), die dazu dient, eine erste Trainingssequenz zu empfangen und eine erste Schätzung mittels einer ersten empfangenen Trainingssequenz zu erzeugen, und
  eine mit der ersten Schätzeinrichtung verbundene Kanalstellenschätzeinrichtung, die dazu dient, die erste Schätzung und eine zweite Trainingssequenz zu empfangen und eine verbesserte Impulsantwortschätzung mittels der ersten Schätzung und einer zweiten empfangenen Trainingssequenz zu berechnen,
  **dadurch gekennzeichnet, daß**
  die erste Schätzeinrichtung (520) eine Maximum-Likelihood-Schätzeinrichtung ist und die erste Schätzung eine Maximum-Likelihood-Schätzung ist,
  die erste Trainingssequenz die gleiche wie die zweite Trainingssequenz ist, und
  die Kanalstellenschätzeinrichtung umfaßt:

eine Schwellenwerterzeugungseinrichtung (508), die dazu dient, die Maximum-Likelihood-Schätzung zu empfangen und eine Menge von Schwellenwerten mittels der Maximum-Likelihood-Schätzung zu erzeugen, eine Erzeugungseinrichtung (510) für Kandidatenkanalimpulsantworten, die dazu dient, die Schwellenwerte zu empfangen und eine Menge von Kandidatenvektoren für Kanalimpulsantwortschätzungen mittels der Schwellenwerte zu erzeugen, und
eine Kanalimpulsantwortauswahleinrichtung (518), die dazu dient, die Kandidatenvektoren für Kanalimpulsantwortschätzungen und einen minimalen Abstandswert zu empfangen und die verbesserte Kanalimpulsantwortschätzung aus den Kandidatenvektoren für Kanalimpulsantwortschätzungen gemäß dem minimalen Wert auszuwählen.

10. System nach Anspruch 9, wobei die Maximum-Likelihood-Schätzeinrichtung (520) umfaßt:

einen Filter (502), der dazu dient, die erste empfangene Trainingssequenz zu empfangen und zu filtern, um eine erste Menge von Vektoren für eine Matrix zu bilden, und
eine Matrixtransformationseinrichtung (504), die dazu dient, die Matrix zu transformieren, um die Maximum-Likelihood-Schätzung zu bilden.

11. System nach Anspruch 9, ferner umfassend
einen Filter (512), der dazu dient, die Trainingssequenz und die Kandidatenvektoren für Kanalimpulsantwortschätzungen zu empfangen und die Trainingssequenz mittels der Kandidatenvektoren für Kanalimpulsantwortschätzungen zu filtern, um eine zweite Menge von Vektoren zu bilden,
eine Abstandsberechnungseinrichtung (514), die dazu dient, die zweite empfangene Trainingssequenz und die zweite Menge von Vektoren zu empfangen und eine Menge von Abstandswerten zwischen der zweiten Menge von Vektoren und der zweiten empfangenen Trainingssequenz zu bestimmen, und
eine Minimumauswahleinrichtung (516), die dazu dient, die Menge von Abstandswerten zu empfangen, einen minimalen Abstandswert aus der Menge von Abstandswerten auszuwählen und den minimalen Abstandswert an die Kanalimpulsantwortauswahleinrichtung (518) auszugeben.

12. System nach Anspruch 9, ferner umfassend
ein Kommunikationsmedium,
mehrere Übertragungseinrichtungen (106), die dazu dienen, mit dem Kommunikationsmedium verbunden zu werden, wobei jede Übertragungseinrichtung dazu dient, einen Datenstream über das Kommunikationsmedium mittels eines Kommunikationskanals (108) zu übertragen,
mehrere Empfänger (110), die dazu dienen, mit dem Kommunikationsmedium verbunden zu werden und die Datenstreams aus dem Kommunikationskanal (108) zu empfangen, und
ein Crosstalk-Filtermodul (112), das dazu dient, mit den mehreren Empfängern (110) verbunden zu werden, die verbesserte Kanalimpulsantwortschätzung zu empfangen und zu verwenden, um die Datenstreams zu filtern, um von den Datenstreams während der Übertragung eingebrachte Crosstalksignale zu verringern.

13. System nach Anspruch 12, ferner umfassend mehrere Ausgleicheinrichtungen (114), die dazu dienen, mit dem Filtermodul verbunden zu werden und die gefilterten Datenstreams mittels einer Menge von im wesentlichen ähnlichen Ausgleichsparametern auszugleichen.

14. System nach Anspruch 12, wobei das Crosstalk-Filtermodul umfaßt:

eine Erzeugungseinrichtung (202) für Kanalimpulsantwortmatrizen, die dazu dient, eine Kanalimpulsantwortmatrix zu erzeugen,
eine Erzeugungseinrichtung (204) für Crosstalkunterdrückungsfiltermatrizen, die dazu dient, eine Crosstalkunterdrückungsfiltermatrix mittels der Kanalimpulsantwortmatrix zu erzeugen, und
einen Filter (206), der dazu dient, die Datenstreams mittels der Crosstalkunterdrückungsfiltermatrix zu filtern.

15. Speichermedium, das maschinenimplementierbare Anweisungen speichert, die einen Prozessor das Verfahren nach einem der Ansprüche 1 bis 8 ausführen lassen.

**Revendications**

1. Procédé d'exécution d'une estimation de canal comprenant :

la réception d'une première séquence de formation (602) ;
la génération d'une première estimation d'une réponse impulsionnelle de canal en utilisant une première séquence de formation reçue (604) ;
la réception d'une seconde séquence de formation (606) ; et
le calcul d'une estimation révisée de réponse impulsionnelle de canal en utilisant ladite première estimation et une seconde séquence de formation reçue (608) ;

**caractérisé en ce que :**

ladite première estimation de la réponse impulsionnelle de canal est une estimation de probabilité maximale ;
la première séquence de formation est identique à la seconde séquence de formation ; et
l'étape de calcul de ladite estimation révisée de la réponse impulsionnelle de canal comprend :

la réception de ladite estimation de probabilité maximale ;
la génération d'un ensemble de valeurs de seuil en utilisant ladite estimation de probabilité maximale ;
la génération d'un ensemble de vecteurs d'estimation de réponse impulsionnelle de canal candidats en utilisant lesdites valeurs de seuil ; et
la sélection de ladite estimation révisée de réponse impulsionnelle de canal à partir desdits vecteurs candidats d'estimation de réponse impulsionnelle de canal.

2. Procédé selon la revendication 1, dans lequel la génération de ladite estimation de probabilité maximale comprend :

le filtrage de ladite première séquence de formation reçue en utilisant un filtre adapté à ladite première séquence de formation reçue pour former un premier ensemble de vecteurs pour une matrice ; et
la transformation de ladite matrice pour former ladite estimation de probabilité maximale.

3. Procédé selon la revendication 1, dans lequel ledit ensemble de valeurs de seuil est généré en résolvant l'équation suivante :

$$t_j = \frac{\max\limits_{k=0,L-1}\left|\hat{h}_k^{ML}\right|}{N}\,j$$

où t = [$t_1$, ... $t_N$] est un ensemble de seuils, $j$ = 1, ..., N, L représente une longueur de réponse impulsionnelle de canal, $\hat{\mathbf{h}}^{ML}$ représente ladite estimation de probabilité maximale, $\hat{h}_k^{ML}$ représente le k$^{ième}$ tour de l'estimation de probabilité maximale de la réponse impulsionnelle de canal, et $k$ = 0, ..., L-1.

4. Procédé selon la revendication 1, dans lequel ledit ensemble de vecteurs candidats d'estimations de réponse impulsionnelle de canal est généré en résolvant l'équation suivante :

$$\hat{h}_k^{(j)} = \begin{cases} \hat{h}_k^{ML}, & \text{if } \left|\hat{h}_k^{ML}\right| \geq t_j \\ 0, & \text{if } \left|\hat{h}_k^{ML}\right| < t_j \end{cases}$$

où $\hat{\mathbf{h}}^{(j)}$ = [$\hat{\mathbf{h}}^{(1)}$,...,$\hat{\mathbf{h}}^{(N)}$] est un ensemble de vecteurs candidats d'estimation de réponse impulsionnelle de canal, $j$ = 1, ..., N. $\hat{h}_k^{(j)}$ est le k$^{ième}$ tour du j$^{ième}$ vecteur candidat d'estimation de réponse impulsionnelle de canal, **t** = [$t_1$, ..., $t_N$] est l'ensemble de seuils, et $\hat{\mathbf{h}}^{ML}$ représente ladite estimation de probabilité maximale.

5. Procédé selon la revendication 1, dans lequel ladite sélection de ladite estimation révisée de réponse impulsionnelle de canal à partir desdits vecteurs candidats d'estimations de réponse impulsionnelle de canal comprend :

le filtrage de ladite première séquence de formation reçue en utilisant lesdits vecteurs candidats d'estimation de réponse impulsionnelle de canal pour former un second ensemble de vecteurs ;
la détermination d'un ensemble de valeurs de distance entre ledit second ensemble de vecteurs et la seconde séquence de formation reçue ;
la sélection d'une valeur de distance minimale à partir dudit ensemble de valeurs de distances ; et
la sélection de ladite estimation révisée de réponse impulsionnelle de canal en utilisant ladite valeur de distance minimale.

6. Procédé selon la revendication 1, comprenant en outre :

la réception de ladite estimation révisée de réponse impulsionnelle de canal à un module de filtrage de diaphonie pour former une matrice (302) de réponse impulsionnelle de canal ;
la création d'une matrice de filtre de suppression de diaphonie basée sur ladite matrice révisée de réponse impulsionnelle de canal (304) ; et
le filtrage de plusieurs flux de données reçus par un canal pour un système à entrées multiples, sorties multiples afin de réduire la diaphonie entre lesdits flux de données en utilisant ladite matrice (306) de filtre de suppression de diaphonie.

7. Procédé selon la revendication 1, comprenant en outre :

la génération d'une seconde estimation de probabilité maximale de la réponse impulsionnelle de canal en utilisant ladite seconde séquence de formation reçue ;
le calcul d'une seconde estimation révisée de réponse impulsionnelle de canal en utilisant ladite seconde estimation de probabilité maximale et ladite première séquence de formation reçue ; et
l'établissement d'une moyenne desdites estimations révisées de la réponse impulsionnelle de canal pour calculer une estimation révisée moyenne de réponse impulsionnelle de canal.

8. Procédé selon la revendication 1, comprenant en outre :

la réception d'une autre pluralité de séquences de formation ;
le calcul d'une pluralité d'estimations de réponse impulsionnelle de canal conformément au procédé précité en utilisant ladite pluralité de séquences de formation ; et
l'établissement d'une moyenne de ladite pluralité d'estimations de réponse impulsionnelle de canal pour calculer une estimation moyenne de réponse impulsionnelle de canal.

9. Système pour exécuter une estimation de canal, comportant :

un premier estimateur (520) pouvant être mis en oeuvre pour recevoir une première séquence de formation et générer une première estimation en utilisant une première séquence de formation reçue ; et
un estimateur de branchement de canal couplé audit premier estimateur pouvant être mis en oeuvre pour recevoir ladite première estimation et une seconde séquence de formation, et pour calculer une estimation révisée de réponse impulsionnelle de canal en utilisant ladite première estimation et une seconde séquence de formation reçue ;

**caractérisé en ce que :**

ledit premier estimateur (520) est un estimateur de probabilité maximale et ladite première estimation est une estimation de probabilité maximale ;
la première séquence de formation est identique à la seconde séquence de formation ; et
ledit estimateur de branchement de canal comporte :

un générateur de seuils (508) pouvant être mis en oeuvre pour recevoir ladite estimation de probabilité maximale et générer un ensemble de valeurs de seuils en utilisant ladite estimation de probabilité maximale ;
un générateur (510) de réponse impulsionnelle de canal candidate pouvant être mis en oeuvre pour recevoir lesdites valeurs de seuil et générer un ensemble de vecteurs d'estimations candidats de réponse impulsionnelle de canal en utilisant lesdites valeurs de seuil ; et
un sélecteur (518) de réponse impulsionnelle de canal pouvant être mis être mis en oeuvre pour recevoir lesdits vecteurs d'estimations candidats de réponse impulsionnelle de canal et une valeur de distance minimale, et pour sélectionner ladite estimation révisée de réponse impulsionnelle de canal à partir desdits vecteurs d'estimations candidats de réponse impulsionnelle de canal conformément à la valeur minimale.

10. Système selon la revendication 9, dans lequel ledit estimateur (520) de probabilité maximale comporte :

un filtre (502) pouvant être mis en oeuvre pour recevoir et filtrer ladite première séquence de formation reçue afin de former un premier ensemble de vecteurs pour une matrice ; et
un transformateur (504) de matrice pouvant être mis en oeuvre pour transformer ladite matrice afin de former ladite estimation de probabilité maximale.

11. Système selon la revendication 9, comportant en outre :

un filtre (512) pouvant être mis en oeuvre pour recevoir ladite séquence de formation et lesdits vecteurs d'estimations candidats de réponse impulsionnelle de canal et pour filtrer ladite séquence de formation en utilisant lesdits vecteurs d'estimations candidats de réponse impulsionnelle de canal afin de former un second ensemble de vecteurs ;
un calculateur (514) de distance pouvant être mis en oeuvre pour recevoir la seconde séquence de formation reçue et ledit second ensemble de vecteurs et pour déterminer un ensemble de valeurs de distance entre ledit second ensemble de vecteurs et ladite seconde séquence de formation reçue ; et
un sélecteur (516) de minimum pouvant être mis en oeuvre pour recevoir ledit ensemble de valeurs de distance, pour sélectionner une valeur de distance minimale à partir dudit ensemble de valeurs de distance et pour délivrer en sortie ladite valeur de distance minimale audit sélecteur (518) de réponse impulsionnelle de canal.

12. Système selon la revendication 9, comportant en outre :

un support de communications ;
un pluralité d'émetteurs (116) pouvant être mis en oeuvre pour se connecter audit support de communications, chaque émetteur pouvant être mis en oeuvre pour transmettre un flux de données par ledit support de communications en utilisant un canal de communications (108) ;
une pluralité de récepteurs (110) pouvant être mis en oeuvre pour se connecter audit support de communications et recevoir lesdits flux de données depuis ledit canal de communications (108) ; et
un module (112) de filtrage de diaphonie pouvant être mis en oeuvre pour se connecter à ladite pluralité de récepteurs (110), pour recevoir et utiliser ladite estimation révisée de réponse impulsionnelle de canal afin de filtrer lesdits flux de données pour réduire des signaux de diaphonie apparus dans lesdits flux de données pendant ladite transmission.

13. Système selon la revendication 12, comportant en outre une pluralité d'égaliseurs (114) pouvant être mis en oeuvre pour se connecter audit module de filtrage et pour égaliser lesdits flux de données filtrés en utilisant un ensemble de paramètres d'égalisation sensiblement similaires.

14. Système selon la revendication 12, dans lequel ledit module de filtrage de diaphonie comporte :

un générateur (202) de matrice de réponse impulsionnelle de canal pouvant être mis en oeuvre pour générer une matrice de réponse impulsionnelle de canal ;
un générateur (204) de matrice de filtre de suppression de diaphonie pouvant être mis en oeuvre pour générer une matrice de filtre de suppression de diaphonie en utilisant ladite matrice de réponse impulsionnelle de canal ; et
un filtre (206) pouvant être mis en oeuvre pour filtrer lesdits flux de données en utilisant ladite matrice de filtre de suppression de diaphonie.

15. Support de stockage qui stocke des instructions exécutables par une machine pour amener un processeur à exécuter un procédé selon l'une quelconque des revendications 1 à 8.

FIG. 1

EP 1 714 449 B1

200

From
Estimator

CIR
Matrix
Generator
202

CSF
Matrix
Generator
204

Filter
206

To
Equalizer

FIG. 2

300

```
                    ┌─────────────┐
                    │    Start    │
                    └──────┬──────┘
                           │
                           ▼
     ┌─────────────────────────────────────┐
     │  estimate a channel impulse response│───302
     │              matrix                 │
     └─────────────────┬───────────────────┘
                       │
                       ▼
     ┌─────────────────────────────────────┐
     │  create a crosstalk suppression filter│
     │  matrix based on the channel impulse │───304
     │          response matrix            │
     └─────────────────┬───────────────────┘
                       │
                       ▼
     ┌─────────────────────────────────────┐
     │   filter a plurality of data streams│
     │  received over a channel for a multiple│
     │  input multiple output system to reduce│───306
     │  far end cross talk between the data│
     │  streams using the crosstalk suppression│
     │           filter matrix             │
     └─────────────────┬───────────────────┘
                       │
                       ▼
                ┌─────────────┐
                │     End     │
                └─────────────┘
```

FIG. 3

**FIG. 4**

**FIG. 5**

600

```
        ┌─────────────┐
        │    Start    │
        └──────┬──────┘
               │
               ▼
   ┌───────────────────────────┐
   │ receive a first training  │────602
   │        sequence           │
   └─────────────┬─────────────┘
                 │
                 ▼
   ┌───────────────────────────┐
   │ estimate a maximum        │
   │ likelihood estimate       │
   │ of a channel impulse      │────604
   │ response using the        │
   │ first received training   │
   │ sequence                  │
   └─────────────┬─────────────┘
                 │
                 ▼
   ┌───────────────────────────┐
   │ receive a second training │────606
   │        sequence           │
   └─────────────┬─────────────┘
                 │
                 ▼
   ┌───────────────────────────┐
   │ estimate at least one     │
   │ channel impulse           │
   │ response estimate using   │────608
   │ the maximum likelihood    │
   │ estimate and the second   │
   │ received training         │
   │ sequence                  │
   └─────────────┬─────────────┘
                 │
                 ▼
        ┌─────────────┐
        │     End     │
        └─────────────┘
```

**FIG. 6**

700

**FIG. 7**

<u>**800**</u>

**FIG. 8**

<u>**900**</u>

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5293401 A
- US 2003147476 A
- US 2003003880 A